# EUROPÄISCHE PATENTSCHRIFT

(11) **EP 2 806 743 B1**
(45) Veröffentlichungstag und Bekanntmachung des Hinweises auf die Patenterteilung: **06.09.2017**
(21) Anmeldenummer: 13707264.1
(22) Anmeldetag: 17.01.2013
(51) Int. Cl.: A01N 65/00, A01N 65/30, A01P 3/00

(54) **ANTIFUNGALE FORMULIERUNGEN ENTHALTEND EINEN RHEUM-WURZELEXTRAKT ZUR BEKÄMPFUNG VON PFLANZENKRANKHEITEN**
ANTIFUNGAL FORMULATIONS COMPRISING AN EXTRACT FROM RHEUM ROOTS FOR THE TREATMENT OF PLANT DISEASES
FORMULATIONS ANTIFONGIQUES COMPRENANT UN EXTRAIT DES RACINES DE RHEUM POUR LE TRAITEMENT DES MALADIES DE PLANTES

(30) Priorität: 24.01.2012 DE 102012001867
(43) Veröffentlichungstag der Anmeldung: 03.12.2014
(73) Patentinhaber: Hochschule Anhalt, 06366 Köthen (DE)
(72) Erfinder: BALTRUSCHAT, Helmut, 39619 Ziemendorf (DE); KABROTH, Kathrin, 06406 Bernburg (DE); SCHELLENBERG, Ingo, 06847 Dessau-Rosslau (DE)
(74) Vertreter: Fischer, Volker
(86) Internationale Anmeldenummer: PCT/DE2013/000031
(87) Internationale Veröffentlichungsnummer: WO 2013/110258

(56) Entgegenhaltungen:
- EP-B1- 2 001 494
- WO-A1-2007/112729
- WO-A1-2007/112730
- DE-A1- 4 411 895
- Volker Fischer: "Letter regarding EP07722138.0", , 22. Oktober 2008 (2008-10-22), Seiten 1-3, XP55062696, Gefunden im Internet: URL:https://register.epo.org/espacenet/app lication?documentId=EN1M9U352612J13&appnum ber=EP07722138&showPdfPage=all [gefunden am 2013-05-13]
- Michelle Wilmot: "Inhibition of Phytopathogenic Fungi on Selected Vegetable Crops by Catechins, Caffeine, Theanine and Extracts of Camellia sinensis (L.) O. Kuntze", Master Thesis, Faculty of Natural and Agricultural Sciences, University of Pretoria, 1. September 2006 (2006-09-01), Seiten 1-132, XP55062694, Pretoria, South Africa Gefunden im Internet: URL:http://upetd.up.ac.za/thesis/submitted /etd-07302008-144409/unrestricted/disserta tion.pdf [gefunden am 2013-05-13]
- DATABASE WPI Week 201071 Thomson Scientific, London, GB; AN 2010-F92984 XP002696903, & KR 2010 0048351 A (IGSBIO) 11. Mai 2010 (2010-05-11)

## Beschreibung

Die Erfindung betrifft die Verwendung einer antifungalen Formulierung zur Bekämpfung von pilzlichen Pflanzenkrankheiten, die zumindest Wirkstoffe oder Wirkstoffzusammensetzungen mit antifungaler Wirkung aus polyphenolischen Extrakten der Wurzeln von Rheum-Arten und anderen polyphenolhaltigen Pflanzen enthalten.

Zahlreiche wichtige Kulturpflanzen sind häufig von Schädigungen betroffen, die auf pilzliche Erreger oder auf abiotischen Stress zurückgeführt werden können. Die pilzlichen Erreger werden zumeist mit synthetischen Fungiziden bekämpft, die ihrerseits allerdings zu nicht unerheblichen unerwünschten Nebenwirkungen führen können.

Eine Alternative könnten Wirkstoffe oder Wirkstoffzusammensetzungen bieten, die auf pflanzlicher Basis gewonnen werden. Der Einsatz rein pflanzlicher Wirkstoffe mit guter Wirkung gegen wichtige Pflanzenkrankheiten im Weinbau und in landwirtschaftlichen sowie gärtnerischen Kulturen kann die Möglichkeit der Produktion neuer innovativer Präparate schaffen. Zudem kann erwartet werden, dass die pflanzlichen Wirkstoffe einen neuartigen Wirkungsmechanismus gegen Pilzkrankheiten aufweisen. Wegen des hohen Risikos der Resistenzbildung von pilzlichen Krankheiten gegenüber synthetischen fungiziden Wirkstoffen und auch aufgrund der Tatsache, dass viele der eingesetzten fungiziden Wirkstoffe den gleichen Wirkungsmechanismus gegenüber bestimmten Pflanzenkrankheiten haben, werden in der Praxis dringend Präparate mit einem neuartigen Wirkungsmechanismus benötigt.

Aus der DE-PS 484 489 ist ein Verfahren zur Bekämpfung von Pflanzenschädlingen bekannt. Darin wird die Wirksamkeit pflanzlicher Extrakte zur Bekämpfung von Schädlingen bei Obstgehölzen durch Einführung in den Saftstrom beschrieben. Rhabarber erscheint dabei in der Aufzählung der nutzbaren Pflanzen.

Die DE 4411 895 A1 beschreibt ein Verfahren zur Bekämpfung von Pilzen auf Pflanzen, Materialien und Saatgut durch das Einwirken einer fungizid wirksamen Menge von Rheum rhabarbarum und Solidago canadensis. Beispielsweise werden Plasmopara viticola als Erreger bei Wein, Phytophthora infestans als Erreger von Krautfäule bei Kartoffeln, Erysiphe cichoracearum als Erreger des Gurkenmehltaus und Botrytis cinerea als Erreger bei Paprika aufgeführt.

In der US 2011/0053771 A1 wird die Verwendung von Gerbstoffen zur Stärkung der Pflanzen gegen die Infektion durch pilzliche Erreger, zum Beispiel Blumeria graminis, beschrieben.

In der Dissertationsschrift von Michelle Wilmot mit dem Titel "Inhibition of Phytopathogenic Fungi on Selected Vegetable Crops by Catechins, Caffeine, Theanine and Extracts of Camellia sinensis (L.) O. Kuntze", Master Thesis, Faculty of Natural and Agricultural Sciences, University of Pretoria, 1. September 2006, Seiten 1 bis 132, ist offenbart, dass Epicatechin, Epigallocatechin und Epigallocatechingallat gegen eine große Zahl an pflanzen pathogenen Pilzen inhibierend wirken. Insbesondere sind die Ergebnisse einer in vitro Inhibition des Pilzwachstums durch Epicatechin (EC), Epigallocatechin (EGC), Epicatechingallat (Ecg) bei einer Konzentration von 2,5 g*L⁻¹ aufgeführt.

Aus der KR 2010 0048351 A ist ein Extrakt aus Rheum undulatum zur Kontrolle von durch Pilze verursachten Pflanzenerkrankungen bekannt.

Wie bei den oben beschriebenen Anwendungen werden bisher im Allgemeinen überwiegend die oberirdischen Teile der Pflanzen verwendet. Des Weiteren wurden für die meisten Anwendungen lediglich protektive Effekte beschrieben.

Die Aufgabe der Erfindung besteht in der Bereitstellung von Formulierungen mit einem oder mehreren Wirkstoffen auf pflanzlicher Basis für eine Verwendung zur Bekämpfung von pilzlichen Pflanzenkrankheiten. Solche Formulierungen sollten dabei idealerweise sowohl protektiv als auch kurativ wirksam sein.

Die Lösung dieser Aufgabe der Erfindung liegt in der Verwendung einer antifungalen Formulierung zur Bekämpfung von pilzlichen Pflanzenkrankheiten, wobei zu den zu bekämpfenden phytopathogenen Pilzen ein oder mehrere phytopathogene Pilze gehören und die antifungale Formulierung zumindest Wirkstoffe oder Wirkstoffzusammensetzungen mit antifungaler Wirkung aus polyphenolischen, keine Anthrachinone und Anthrachinonderivate enthaltenden Extrakten der Wurzeln von Rheum-Arten enthält, wobei diese Wirkstoffe oder Wirkstoffzusammensetzungen erhältlich sind durch ein Verfahren, umfassend die folgenden Verfahrensschritte:
a) kontinuierlich oder batchweise durchgeführte ein- oder mehrstufige Extraktion der gereinigten und zerkleinerten Wurzeln, wobei die Wurzeln ungetrocknet oder getrocknet, vorzugsweise getrocknet und gemahlen, eingesetzt werden mittels eines alkoholischen Lösungsmittels;
b) schonende Entfernung des alkoholischen Lösungsmittels bei reduziertem Druck und bei Temperaturen bis maximal 50 °C unter Zugabe von Wasser, wobei
   - aus der gebildeten wässrigen Phase lipophile Begleitstoffe durch Kühlen bei einer Temperatur von 2 bis 8 °C ausgefällt und mittels Filtration oder Zentrifugation entfernt werden und weitere lipophile Begleitstoffe durch anschließendes Ausschütteln der wässrigen Phase mit Petrolether entfernt werden oder
   - aus der gebildeten wässrigen Phase lipophile Begleitstoffe mittels flüssig/flüssig-chromatografischer Verfahren abgetrennt werden;
c) extraktive Auftrennung des unter b) gewonnenen wässrigen Extraktes unter Verwendung eines organischen Lösungsmittels aus der Gruppe der Ester, wie zum Beispiel Essigsäureethylester, in eine hydrophile und eine hydrophobe Phase; und
d) Gewinnung von Extrakten aus beiden Extraktphasen des Verfahrensschrittes c).

Gemäß der Erfindung werden polyphenolische Extrakte, die in der oben beschriebenen Weise erhältlich sind, im Verfahrensschritt d) mit den Teilschritten d₁) bis d₃) gewonnen, bei denen
d₁) eine säulenchromatografische Auftrennung an Sephadex LH-20 der hydrophoben Extraktphase oder der hydrophilen Extraktphase erfolgt, wobei als Elutionsmittel nacheinander unterschiedliche Alkohole, bevorzugt Methanol, Ethanol, Propanol oder Butanol, und ein Gemisch aus Lösungsmitteln der Alkanone-Reihe, vorzugsweise Propanon, Butanon oder Pentanon, und Wasser eingesetzt werden, wonach eine begrenzte Anzahl von Fraktionen resultiert und danach
d₂) die gewonnenen Fraktionen aus der hydrophoben Phase oder der hydrophilen Phase mit jeweils gleichem Inhaltsstoffspektrum zu Wirkstofffraktionen zusammengefasst werden können, worauf
d₃) eine Auswahl einzelner Wirkstofffraktionen zur Verwendung nach Durchführung eines Wirksamkeitsnachweises der Wirkstofffraktionen hinsichtlich ihrer protektiven und/oder kurativen Wirksamkeit gegenüber phytopathogenen Pilzen getroffen wird.

Auf diese Weise können Wirkstoffe auf pflanzlicher Basis entwickelt werden, die bezüglich der beschriebenen Anwendung neu sind. Die Konzeption der Erfindung besteht darin, dass hierbei pflanzliche Polyphenole mit protektiver sowie kurativer Wirkung gegenüber pilzlichen Erregern und dem Potenzial, wichtige Kulturpflanzen auch vor abiotischem Stress durch Stärkung des antioxidativen Potenzials zu schützen, zur Anwendung kommen, wobei diese pflanzlichen Polyphenole die Grundlage für die Entwicklung innovativer Pflanzenschutzpräparate bilden können. Insbesondere erfolgt eine Nutzung der antifungalen Wirkung und Radikalfängereigenschaften definierter pflanzlicher Polyphenole beziehungsweise Polyphenolfraktionen aus Rheum-Wurzeln und Wurzelbiomasse anderer polyphenolhaltiger Pflanzen aus der Familie der Polygonaceae wie zum Beispiel Rumex für die Herstellung effektiver Wirkstoffe und Wirkstofffraktionen. Im Unterschied zu vielen früheren Anwendungen aus dem Stand der Technik nutzt die vorliegende Erfindung Wirkstoffe und Wirkstofffraktionen, die durch den Einsatz einer optimierten Extraktionsmethode allein aus Rhabarberwurzeln und den Wurzeln der anderen polyphenolhaltigen Pflanzen gewonnen werden. Im Gegensatz zu vielen Rhabarberextrakten, die aus dem Stand der Technik bekannt sind, enthalten die erfindungsgemäß angewendeten Extrakte keine Anthrachinone und Anthrachinonderivate, da diese im Schritt b) als lipophile Begleitstoffe entfernt werden. Für die erfindungsgemäßen Anwendungen konnte, zum Beispiel beim Befall von Gerste mit Blumeria graminis, auch eine kurative Wirkung nachgewiesen werden. Somit können Formulierungen, die auf der Basis der erfindungsgemäß angewendeten Extrakte entwickelt werden, überraschenderweise sowohl zur protektiven als auch zur kurativen Bekämpfung von phytopathogenen Pilzen an Pflanzen genutzt werden.

Der Verfahrensschritt a), das heißt die Extraktion, findet vorzugsweise in einer bis hundert Stufen statt. Besonders bevorzugt ist dabei ein Bereich von zwei bis sechs Stufen. In einer besonders bevorzugten Ausgestaltung des Extraktionsverfahrens erfolgt der Verfahrensschritt b), das heißt die schonende Entfernung des alkoholischen Lösungsmittels bei reduziertem Druck und bei Temperaturen bis maximal 50 °C unter Zugabe von Wasser, bei der aus der gebildeten wässrigen Phase lipophile Begleitstoffe durch Kühlen bei einer Temperatur von 2 bis 8°C ausgefällt und mittels Filtration oder Zentrifugation entfernt werden und weitere lipophile Begleitstoffe durch anschließendes Ausschütteln der wässrigen Phase mit Petrolether entfernt werden unter Einsatz eines Schutzgases zur Reduzierung oxidativer Prozesse. Vorteilhafterweise ist dabei ein chemisch inertes Schutzgas vorgesehen. Als bevorzugtes Schutzgas wird dabei Stickstoff verwendet. Im Falle der Anwendung von flüssig/flüssig-chromatografischen Verfahren zur Abtrennung lipophiler Begleitstoffe in Schritt b) kommen unter anderem flüssig/flüssig-verteilungschromatographische Trenntechniken, wie zum Beispiel die sogenannte High-Speed-Countercurrent-Chromatography (HSCCC) und/oder die sogenannte Fast-Centrifugal-Partioning-Chromatography (FCPC), zum Einsatz. Im Verfahrensschritt c) erfolgt dann die extraktive Auftrennung des unter b) gewonnenen wässrigen Extraktes unter Verwendung eines organischen Lösungsmittels aus der Gruppe der Ester in eine hydrophile und eine hydrophobe Phase.

Wie unter Verfahrensschritt d₁) bereits erwähnt, werden dabei nacheinander immer mehrere verschiedene Alkohole eingesetzt, das heißt mindestens zwei Alkohole, vorzugsweise unterschiedlicher Polarität.

Ein weiterer Aspekt der Erfindung betrifft die Verwendung der erfindungsgemäßen antifungalen Formulierungen zur Bekämpfung von pilzlichen und/oder durch Eipilze verursachten Pflanzenkrankheiten. Zu den zu bekämpfenden phytopathogenen Pilzen oder Eipilzen können ein oder mehrere phytopathogene Pilze oder Eipilze, zum Beispiel Erysiphe spec.; Blumeria, insbesondere Blumeria graminis f. sp. hordei; Rostkrankheiten, insbesondere Puccinia graminis, Puccinia triticina, Puccinia striiformis, Phakopsora spec., Hemileia vastatrix, Uromyces dianthi; Oidium; Septoria; Fusarium, insbesondere Fusarium solani complex, Fusarium oxysporum, Fusarium verticillioides, Fusarium proliferatum, Fusarium culmorum, Fusarium graminearum; Rhizoctonia, insbesondere Rhizoctonia solani-Komplex; Alternaria; Helminthosporium; Bipolaris, insbesondere Bipolaris sorokiniana; Thielaviopsis; Botrytis; Phytophthora, insbesondere Phytophthora capsici, Phytophthora infestans; Fusarium, insbesondere Fusarium spec.; Venturia, insbesondere Venturia inaeqaulis; Plasmopora, insbesondere Plasmopora viticola; oder Perenospora zählen.

Aufgrund ihrer hervorragenden Pflanzenverträglichkeit können die erfindungsgemäßen Polyphenole in allen Kulturpflanzen eingesetzt werden, bei denen die Infektion der durch die polyphenolischen Extrakte kontrollierten Pilze und/oder Eipilze unerwünscht ist, zum Beispiel Getreide, Mais, Reis, Leguminosen, Kartoffeln, Tomaten, Gemüse, Obstbäume, Reben oder Zierpflanzen.

Darüber hinaus können die erfindungsgemäßen polyphenolischen Extrakte biologische Antagonisten in Koformulierung enthalten, die für die Kontrolle von Viren, Bakterien, Nematoden, Pilzen, Insekten oder Unkräutern geeignet sind. Beispiele für solche biologische Antagonisten sind: Bacillus thuringiensis, Bacillus subtilus, Verticillium lecanii, Autographica californica NPV, Beauvaria bassicana, Metarhizium anisopliae, Pseudomonas fluorescens, Steptomyces griseoviridis, Trichoderma harzianum, Piriformospora indica und Sebacina vermifera. Als Mischungspartner werden vorzugsweise solche biologischen Antagonisten ausgewählt, welche eine ergänzende Wirkung zu den Rheum-Extrakten aufweisen, also gegen Krankheiten wirken, die von den Rheum-Extrakten nicht erfasst werden.

Ferner können Koformulierungen mindestens eine der erfindungsgemäßen polyphenolischen Substanzen und ein chemisches Agenz enthalten, das systemisch erworbene Resistenz (systemic aquired resistance = SAR) in Pflanzen induziert, das heißt also einen Wirkstoff, der über die Modulierung des Salicylsäure-Biosyntheseweges sowie über die Induktion von pathogenesis-related (PR)-Genen charakterisiert ist und somit zu der in Pflanzen erworbenen Resistenz (SAR) gegenüber Pflanzenkrankheiten beiträgt, insbesondere 2,6-Dichlor-isonikotinsäure (DCINA) oder Benzo(1,2,3)-thiadiazolcarbothionsäure-S-methylesther (BTH), die als synthetische Wirkstoffe über die Modulierung der Salicylsäure-Aktivität wirken. Zudem können Koformulierungen mindestens eine der erfindungsgemäßen polyphenolischen Substanzen beziehungsweise Wirkstoffe aus dem polyphenolischen Extrakt und chemische Agenzien oder apathogene, das heißt nichtpathogene, Wurzel besiedelnde Rhizobakterien oder Pilze, insbesondere symbiotische Wurzelpilze, enthalten, die eine induzierte systemische Resistenz (ISR = induced systemic resistance) in Pflanzen erzeugen. Es handelt sich dabei um solche Mikroorganismen, welche über die Modulierung der Jasmonat-Biosynthese zu der in Pflanzen induzierten Resistenz (ISR) gegenüber Pflanzenkrankheiten beitragen. Vorzugsweise werden dabei als symbiotische Wurzelpilze arbuskuläre Mykorrhizapilze oder Sebacina-Arten, insbesondere Piriformospora spec. (zum Beispiel Piriformospora indica) oder Sebacina vermifera, verwendet.

Ferner können Koformulierungen mindestens eine der erfindungsgemäßen polyphenolischen Substanzen und ein Adjuvants oder mehrere Adjuvantien zur Verbesserung der Wirkung und Regenfestigkeit enthalten. Dabei können beliebige, kommerziell erhältliche Adjuvantien zur Anwendung kommen.

Bevorzugte Rheum-Arten für die Herstellung der Extrakte, die in der erfindungsgemäßen Applikation angewendet werden, sind: Rheum rhaponticum L., Rheum officinale Baill. sp., Rheum palmatum L., Rheum altaicum LOSINSK., Rheum rhabarberum L., Rheum undulatum L., Rheum alexandrae VEITCH., Rheum wittrockii LUNDSTR, Rheum maximowiczii LOSINSK., Rheum leucorrhizum PALL., Rheum tanguticum Maxim., Rheum nobile Hook et. Thomson, Rheum alexandrae Batalin, Rheum tibeticum und Rheum palaestinum, Rheum australe, Rheum collinianum, Rheum compactum, Rheum delavayi, Rheum franzenbachii, Rheum moorcroftianum, Rheum nanum, Rheum ribes, Rheum robertianum, Rheum rupestre, Rheum songaricum, Rheum spiciforme, Rheum tataricum, Rheum tetragonopos, Rheum turcestanicum und Rheum webbianum. Dabei wird für eine Applikation vorzugsweise genetisch einheitliches Material verwendet.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
- Fig. 1:: ein Extraktionsschema für die Aufarbeitung getrockneter, gemahlener Rhabarberwurzeln,
- Fig. 2:: den Einfluss unterschiedlicher Rharbarberwurzelextrakte (hydrophile Phase) auf den Befall von Gerste der Sorte Hansa mit dem Gerstenmehltau Blumeria graminis f. sp. hordei bei protektiver Anwendung (Bonitur: 7 Tage nach Inokulation),
- Fig. 3:: den Einfluss unterschiedlicher Rharbarberwurzelextrakte (hydrophobe Phase) auf den Befall von Gerste der Sorte Hansa mit dem Gerstenmehltau Blumeria graminis f. sp. hordei bei protektiver Anwendung (Bonitur: 7 Tage nach Inokulation),
- Fig. 4:: den Einfluss unterschiedlicher Rharbarberwurzelextrakte (hydrophile Phase) auf den Befall von Gerste der Sorte Hansa mit dem Gerstenmehltau Blumeria graminis f. sp. hordei bei protektiver Anwendung (Bonitur: 14 Tage nach Inokulation),
- Fig. 5:: den Einfluss unterschiedlicher Rharbarberwurzelextrakte (hydrophobe Phase) auf den Befall von Gerste der Sorte Hansa mit dem Gerstenmehltau Blumeria graminis f. sp. hordei bei protektiver Anwendung (Bonitur: 14 Tage nach Inokulation),
- Fig. 6:: die Wirkung unterschiedlicher Rhabarberwurzelextrakte (GT2 [GT = Genotyp] und GT19; hydrophobe Phase) auf den Befall von Gerste der Sorte Hansa mit dem Gerstenmehltau Blumeria graminis f. sp. hordei in der Dosierung von 250 ppm bei protektiver Anwendung (Bonitur: 7 Tage nach Inokulation),
- Fig. 7:: den Einfluss unterschiedlicher Rharbarberwurzelextrakte (hydrophile Phase) auf den Befall von Gerste der Sorte Hansa mit dem Gerstenmehltau Blumeria graminis f. sp. hordei bei kurativer Anwendung (Bonitur: 7 Tage nach Inokulation),
- Fig. 8:: den Einfluss unterschiedlicher Rharbarberwurzelextrakte (hydrophobe Phase) auf den Befall von Gerste der Sorte Hansa mit dem Gerstenmehltau Blumeria graminis f. sp. hordei bei kurativer Anwendung (Bonitur: 7 Tage nach Inokulation),
- Fig. 9:: den Einfluss unterschiedlicher Rharbarberwurzelextrakte (hydrophile Phase) auf den Befall von Gerste der Sorte Hansa mit dem Gerstenmehltau Blumeria graminis f. sp. hordei bei kurativer Anwendung (Bonitur: 14 Tage nach Inokulation),
- Fig. 10:: den Einfluss unterschiedlicher Rharbarberwurzelextrakte (hydrophobe Phase) auf den Befall von Gerste der Sorte Hansa mit dem Gerstenmehltau Blumeria graminis f. sp. hordei bei kurativer Anwendung (Bonitur: 14 Tage nach Inokulation).
- Fig. 11:: die Wirkung unterschiedlicher Rhabarberwurzelextrakte (GT2 und GT 19; hydrophobe Phase) auf den Befall von Weizen der Sorte Kanzler mit Weizenbraunrost Puccinia triticina,
- Fig. 12:: Ergebnisse eines Freilandversuches zur Testung der Wirkung eines Rhabarberwurzelextraktes (hydrophobe Phase) gegen den Echten Mehltau (Oidium) in Reben (Traubenbefall),
- Fig. 13:: eine Aufnahme der chromatografischen Auftrennung der hydrophoben Phase, gewonnen aus GT 19 (Rheum rhaponticum L.) bei UV-Detektion bei 280 nm und
- Fig. 14:: das Massenspektrum von Piceatannolglucosid mit der Masse 390 Da als ein Beispiel zur qualitativen Identifizierung der polyphenolischen Substanzen mittels Massenspektroskopie.

Die Extrakte wurden in Anlehnung an die in den DE 10 2006 015 573 A1,
DE 10 2006 015 574 A1 und DE 10 2006 015 575 A1 offenbarten Extraktionsverfahren hergestellt.

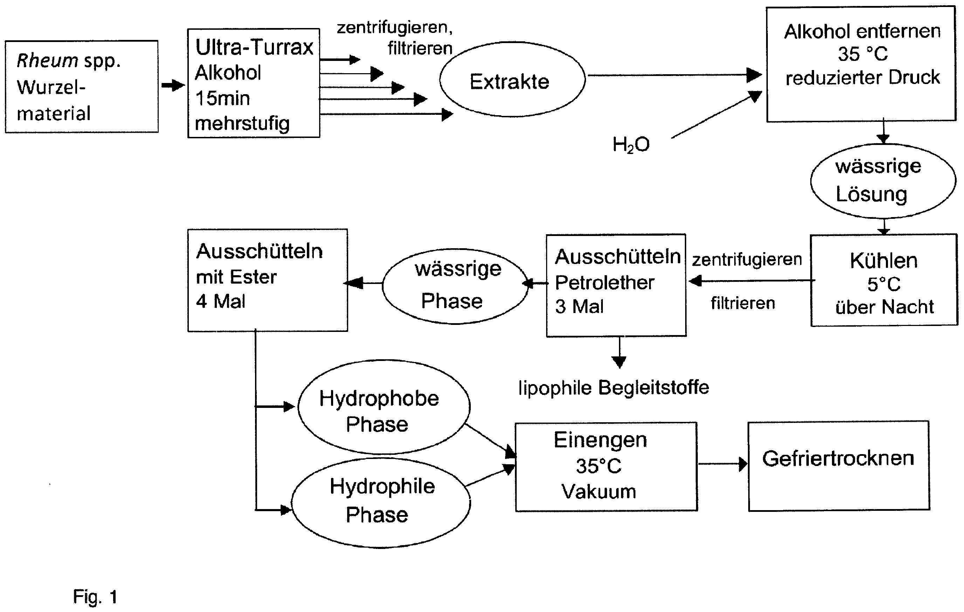

Ein erfindungsgemäßes Extraktionsschema für die Aufarbeitung getrockneter, gemahlener Rhabarberwurzeln ist in der Fig. 1 dargestellt.

Für die Erzeugung der wässrigen Ausgangsphase wird ein alkoholisches Lösungsmittel, zum Beispiel Methanol, als Primär-Extraktionsmittel eingesetzt, und diese alkoholischen Extrakte werden weiter verwendet. Nach der mehrstufigen extraktiven Aufarbeitung kann, wie unter d₁) bis d₃) (siehe oben) dargestellt, eine präparative säulenchromatografische Fraktionierung der hydrophilen bzw. hydrophoben Phase durchgeführt werden.

Für eine Extraktion des Rhabarberwurzel-Materials wurden 1 kg einer getrockneten und gemahlenen Wurzelprobe einer mehrstufigen Wirbelextraktion mit etwa 8000 ml alkoholischem Lösungsmittel für je 15 min am Ultra-Turrax unterworfen. Die gesammelten Extrakte wurden dann am Rotationsverdampfer unter Vakuum bei Temperaturen bis maximal 50 °C eingeengt, und nach Zugabe von 500 ml Wasser wurde das alkoholische Lösungsmittel vollständig abgezogen. Zur Ausfällung störender lipophiler Substanzen wurde der wässrige Extrakt über Nacht unter Stickstoffbegasung im Kühlschrank bei 5 °C aufbewahrt. Die Fällungen konnten am nächsten Tag abzentrifugiert werden. Zur Abtrennung weiterer lipophiler Begleitstoffe wurde die wässrige Lösung anschließend noch dreimal mit je 500 ml Petrolether ausgeschüttelt. Die so gereinigte wässrige Phase wurde daraufhin viermal mit je 750 ml organischem Lösungsmittel aus der Gruppe der Ester, wie zum Beispiel Essigsäureethylester, ausgeschüttelt, wonach sich in den vereinigten hydrophoben Phasen vermehrt niedrig oligomerisierte Verbindungen befinden sollten und in der verbleibenden hydrophilen Phase Verbindungen mit höherem Oligomerisierungsgrad. Sowohl die hydrophobe als auch die hydrophile Phase wurden dann schonend bei reduziertem Druck und bei Temperaturen bis maximal 50 °C eingeengt, mit wenig Wasser aufgenommen und anschließend gefriergetrocknet.

Die gefriergetrockneten hydrophoben und hydrophilen Extrakte wurden bis zur weiteren Verwendung unter Stickstoffatmosphäre bei -21 °C aufbewahrt. Die säulenchromatografische (sc) präparative Auftrennung der hydrophoben sowie der hydrophilen Phase erfolgte gemäß einer bevorzugten Ausführungsform der Erfindung, um das Gesamtspektrum an polyphenolischen Verbindungen auf eine begrenzte Anzahl an Substanzen einzuschränken. Zur säulenchromatografischen (sc) Trennung wurde Sephadex LH-20 eingesetzt. Als Elutionsmittel dienten nacheinander unterschiedliche Alkohole. Zur Trennung polymerer Substanzen sind Gemische aus Lösungsmitteln der Alkanone-Reihe mit Wasser geeignet.

Die hydrophobe beziehungsweise hydrophile Phase wurde in kurzkettigen Alkoholen beziehungsweise in Alkohol/Wasser-Gemischen gelöst, auf die Säule (Länge 100 cm, Durchmesser 5 cm) aufgegeben und nacheinander mit unterschiedlichen Alkoholen sowie Gemischen aus Alkanonen und Wasser eluiert. Hierfür wurde eine MPLC-Anlage mit Probeaufgabepumpe genutzt. Nach dünnschichtchromatografischer Überprüfung (DC) der erhaltenen Reagenzglasfraktionen wurden für die einzelnen Rheum-Genotypen sowohl die Fraktionen der hydrophoben Phase als auch die Fraktionen der hydrophilen Phase mit gleichem Inhaltsstoffspektrum zusammengefasst.

Nach säulenchromatografischer Trennung der hydrophoben Phase resultierten zum Beispiel bei Rheum palmatum L. 11 Fraktionen, bei Rheum rhaponticum L. 12 Fraktionen.

### Anwendung der Extrakte

Die Anwendung von solchen in der oben beschriebenen Weise erhältlichen Extrakten ist für die Bekämpfung von phytopathogenen Pilzen an Pflanzen bisher nicht bekannt. Es wurden Untersuchungen mit Rhabarberwurzelextrakten an verschiedenen Pflanzenkrankheiten mit dem Ergebnis durchgeführt, dass die durch das Extraktionsverfahren erhaltenen Extrakte gegen ein sehr breites Spektrum kommerziell wichtiger Pflanzenkrankheiten wirksam sind. Bei bestimmten Pflanzenkrankheiten, wie Gerstenmehltau (Blumeria graminis f. sp. hordei), sind diese Extrakte sowohl bei protektiver als auch bei kurativer Anwendung wirksam.

### Protektive Anwendung gegen Gerstenmehltau

### Material und Methoden:

Gerstenpflanzen (3 Pflanzen/Gefäß) wurden drei Wochen in Fruhstorfer Erde kultiviert. Nach Ablauf von 7 Stunden nach Applikation der ganzen Pflanzen mit den Versuchsprodukten wurden 7 cm lange Blattsegmente, beginnend von der Halmbasis, abgeschnitten und je 15 Blätter des jüngsten sowie zweitjüngsten Blattes auf Benzimidazolagar in quadratischen Petrischalen (10 x 10 cm) ausgelegt. Dazu wurde 0,5 % Agar Agar unter Zumischung von 40 ppm Benzimidazol nach dem Autoklavieren verwendet. Benzimidazol wurde dem Agar zugegeben, um ein frühzeitiges Austrocknen der Blätter zu verhindern. Die Inokulation der Blätter erfolgte mit frischen Konidien des Gerstenmehltaupilzes Blumeria graminis f. sp. hordei (Rasse A6) im Mehltau-Turm durch Windverteilung (Inkubationszeit: 7 und 14 Tage). Die Bonitur nach 14 Tagen diente dazu, gegebenenfalls die Dauerwirkung der eingesetzten Versuchspräparate beurteilen zu können, da von kommerziell eingesetzten Fungiziden bekannt ist, dass die Dauerwirkung zum Teil begrenzt ist.

Die Konzentration der Präparate für die Blattapplikation an ganzen Pflanzen wurde auf 1000 ppm eingestellt. Die Auswertung erfolgte durch Evaluierung der Mehltaupusteln pro Blatt auf 5 cm Blattlänge.

### Ergebnisse:

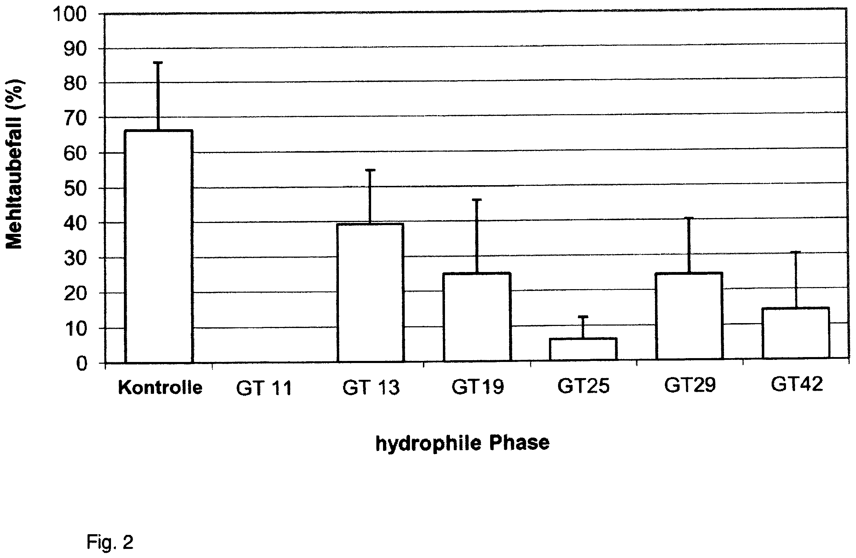

Die Kontrollpflanzen waren intensiv mit Mehltau besiedelt. Es wurden 66 % Blattbefall nach 7 Tagen und 97 % Blattbefall nach 14 Tagen beobachtet, wie die Figuren 2 bis 5 zeigen.

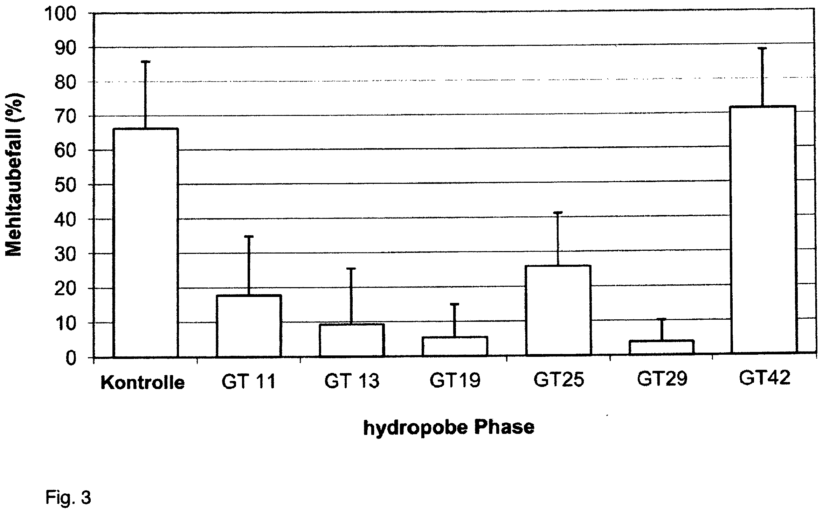

Wie aus der Fig. 2 und der Fig. 3 ebenfalls hervorgeht, zeigten alle geprüften Rhabarberwurzelextrakte nach 7 Tagen eine deutliche Wirkung gegen Gerstenmehltau. Zwischen den Rhabarberwurzelextrakten ergaben sich jedoch bemerkenswerte Unterschiede. Die hydrophile Phase, gewonnen aus dem Rhabarbergenotyp GT 11, zeigte eine 100%ige Wirkung und war somit die beste Versuchsphase. Auch die hydrophile Phase von GT 25 sowie die jeweiligen hydrophoben Phasen von GT 13, GT 19 und GT 29 waren sehr wirksam, während im Vergleich zu diesen Fraktionen die übrigen Versuchspräparate in der Wirkung abfielen. Die relativ schwächste Fraktion war die hydrophobe Phase von GT 42.

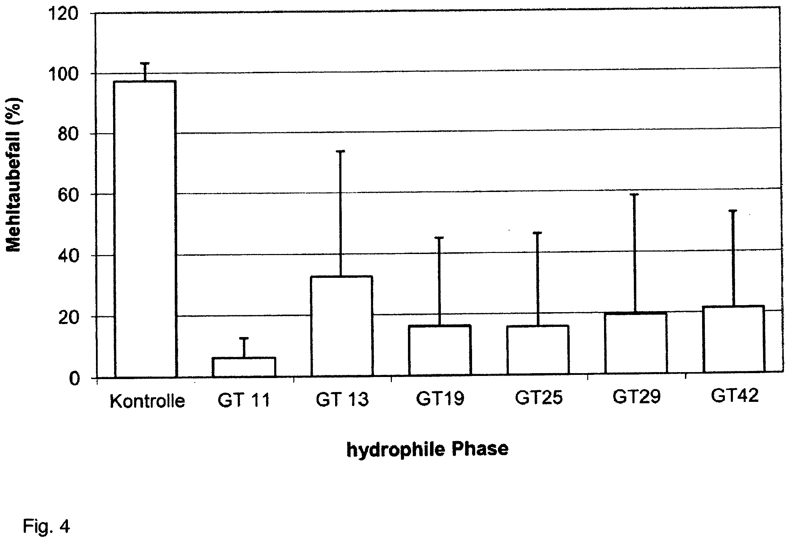

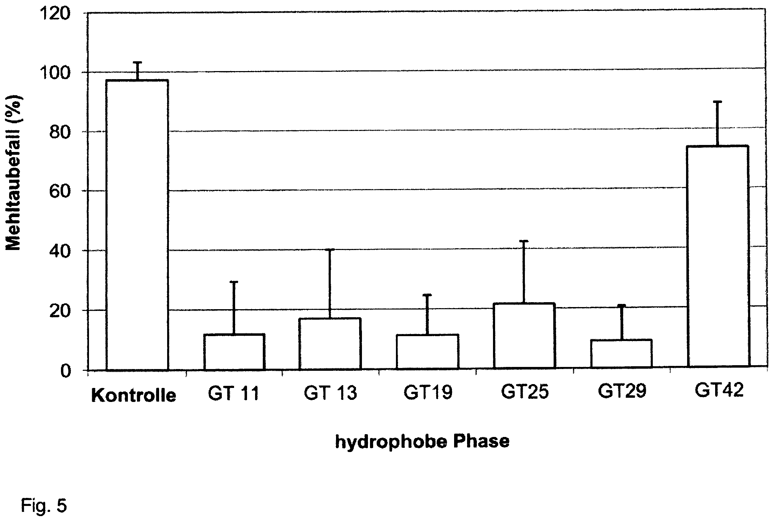

Nach 14 Tagen wurde bei Anwendung der hydrophilen Phase von GT 11 ein minimaler Restbefall von 6 % detektiert (siehe Fig. 4). Die hydrophoben Phasen der GT 11, GT 19 sowie GT 29 überzeugten ebenfalls mit einem geringen Restbefall um die 10 % (siehe Fig. 5). Die relativ schwächste Phase war erneut die hydrophobe Phase von GT 42.

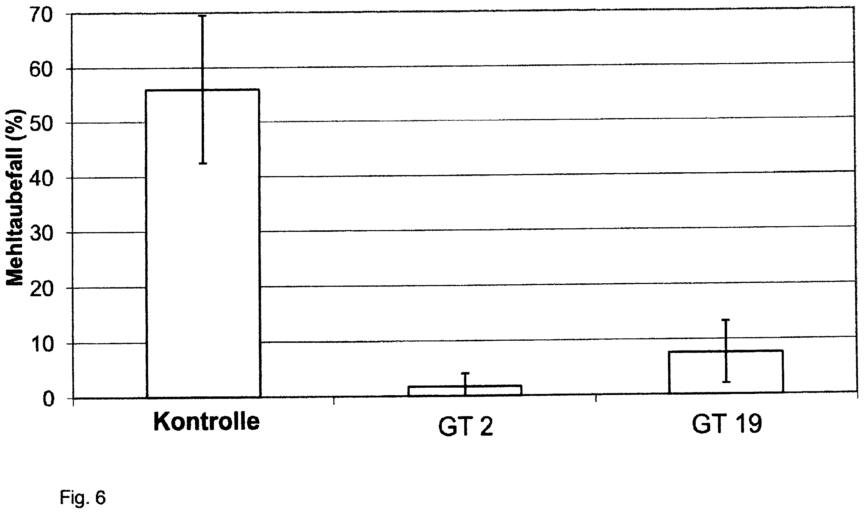

Aufgrund der guten protektiven Wirkung erfolgte eine weitere protektive Anwendung gegen Gerstenmehltau mit 250 ppm Präparat (Fig. 6). Auch in der niedrigeren Dosierung von 250 ppm ergab sich eine gute Wirkung der getesteten Rhabarberwurzelextrakte, wie am Beispiel der hydrophoben Phase von GT 2 und GT 19 belegt werden konnte (Fig. 6).

### Kurative Anwendung gegen Gerstenmehltau

### Material und Methoden:

Gerstenpflanzen, 3 Pflanzen pro Gefäß, wurden drei Wochen in Fruhstorfer Erde kultiviert. Die Applikation der Versuchspräparate erfolgte 2 Tage nach der Inokulation der Blätter. Die Inokulation erfolgte mit frischen Konidien des Gerstenmehltaupilzes Blumeria graminis f. sp. hordei (Rasse A6) im Mehltau-Turm durch Windverteilung. Es wurden für einen Blattsegmenttest 7 cm lange Blattsegmente, beginnend von der Halmbasis, abgeschnitten und je 15 Blätter des jüngsten sowie zweitjüngsten Blattes auf Benzimidazolagar in quadratischen Petrischalen (10 x 10 cm) ausgelegt. Dazu wurde 0,5 % Agar Agar unter Zumischung von 40 ppm Benzimidazol nach dem Autoklavieren verwendet.

Die Konzentration der Präparate für die Blattapplikation an ganzen Pflanzen wurde auf 1000 ppm eingestellt. Die Auswertung der Mehltauwirkung erfolgte nach 7 und 14 Tagen durch Evaluierung der Mehltaupusteln pro Blatt auf 5 cm Blattlänge.

### Ergebnisse:

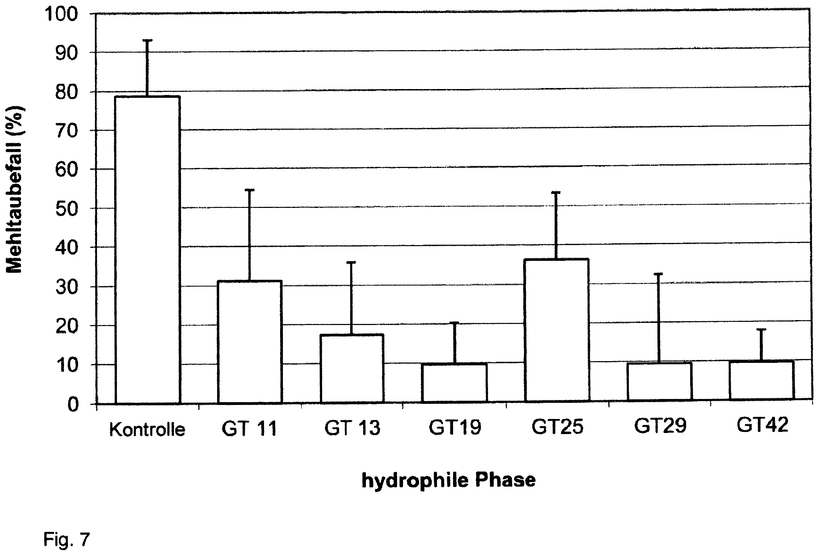

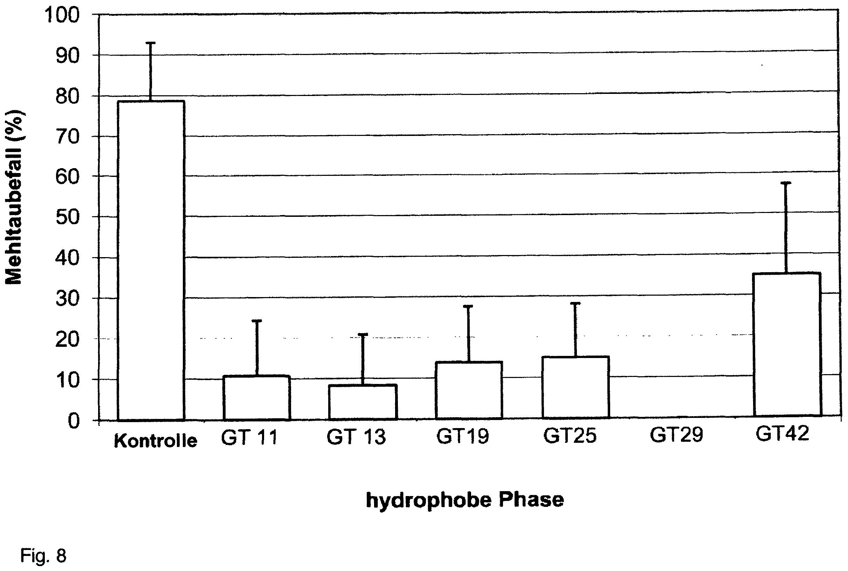

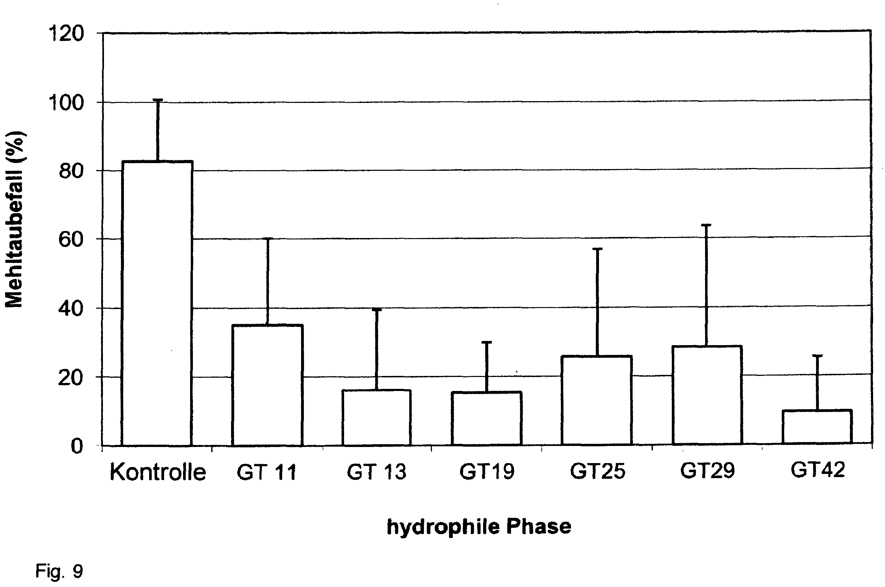

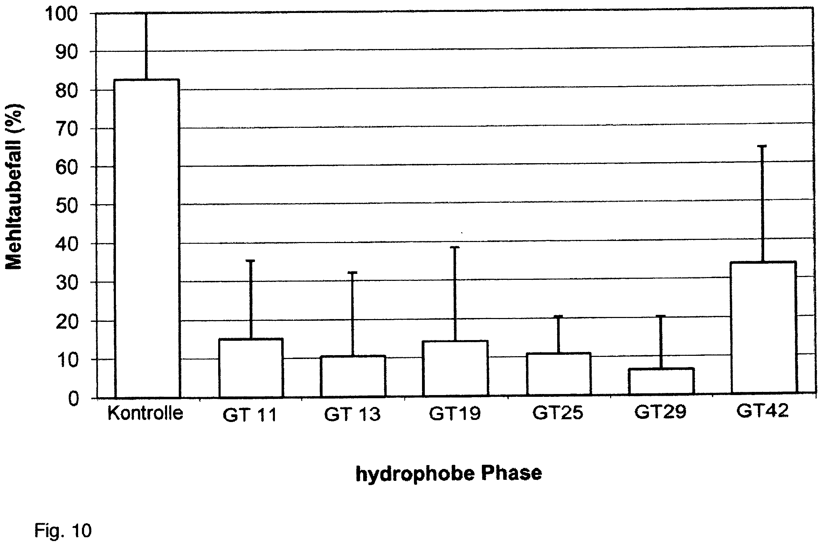

Nach 7 Tagen zeigten auch bei kurativer Anwendung die meisten geprüften Rhabarberwurzelextrakte eine deutliche Wirkung gegen Gerstenmehltau (siehe Fig. 7 und Fig. 8). Die beste Fraktion war die hydrophobe Phase des Rhabarbergenotyps GT 29 mit einer 100%igen Wirkung (siehe Fig. 8). Mit Ausnahme der hydrophilen Phasen von GT 11, GT 25 sowie der hydrophoben Phase von GT 42 konnte auch bei den übrigen Versuchspräparaten eine gute Wirkung gegen Mehltau beobachtet werden. Nach 14 Tagen ergab sich bei allen geprüften Rhabarberwurzelextrakten ein gewisser Restbefall (siehe Fig. 9 und Fig. 10). Dennoch überzeugte immer noch insbesondere die hydrophobe Phase aus GT 29 mit nur 7 % Restbefall (siehe Fig. 10). Die hydrophile Phase von GT 42 sowie die hydrophoben Phasen von GT 13 und GT 25 waren ebenfalls sehr wirksam (siehe Fig. 9 und Fig. 10).

### Schlussfolgerung nach der protektiven sowie kurativen Anwendung der Versuche:

Die geprüften Rhabarberwurzelextrakte zeigten sowohl bei protektiver als auch kurativer Anwendung eine bemerkenswerte Wirkung gegen Mehltau.

Mehltaubekämpfung stellt im Pflanzenschutz im Übrigen eine permanente Herausforderung dar, da wegen der erheblichen Resistenzprobleme in der Praxis die Zahl hochwirksamer Mehltaumittel limitiert ist. Generell besteht daher ein Bedarf an guten Mehltaumitteln in diversen Kulturen, unter anderem in Getreide und Reben. In diesem Zusammenhang sei der Hinweis erlaubt, dass im biologischen Anbau von Reben keine wirklich guten Präparate gegen Echten Mehltau zur Verfügung stehen. Eine entsprechend gute Wirkung vorausgesetzt, könnte die Verwendung eines Rhabarberwurzelextraktes als biologisches Präparat mit entsprechend geringen amtlichen Auflagen auch für den biologischen Anbau von Reben interessant sein.

### Protektive Anwendung gegen Weizenbraunrost (Puccinia triticina)

Weizenpflanzen der Sorte Kanzler, 3 Pflanzen pro Gefäß, wurden drei Wochen in Fruhstorfer Erde kultiviert. Nach Ablauf von 7 Stunden nach Applikation der ganzen Pflanzen mit den Versuchsprodukten wurden 7 cm lange Blattsegmente, beginnend von der Halmbasis, abgeschnitten und je 15 Blätter des jüngsten sowie zweitjüngsten Blattes auf Benzimidazolagar in quadratischen Petrischalen (10 x 10 cm) ausgelegt. Dazu wurde 0,5 % Agar Agar unter Zumischung von 40 ppm Benzimidazol nach dem Autoklavieren verwendet. Die Inokulation der Blätter erfolgte durch Besprühen der Blätter mittels einer Membranpumpe mit frischen Uredosporen des Weizenbraunrostes Puccinia triticina. Die Inkubationszeit betrug 10 Tage.

Die Konzentration der Präparate für die Blattapplikation an ganzen Pflanzen wurde auf 1000 ppm eingestellt. Die Auswertung erfolgte durch Evaluierung der Rostpusteln pro Blatt auf 5 cm Blattlänge.

### Ergebnisse:

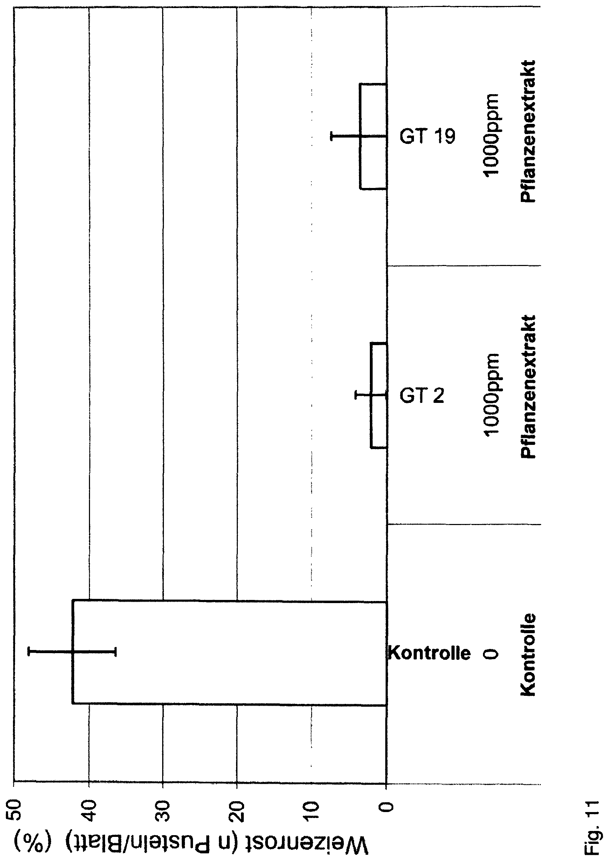

Die Fig. 11 zeigt die Wirkung der Rhabarberwurzelextrakte GT 2 und GT 19 (hydrophobe Phase) auf den Befall von Weizen der Sorte Kanzler mit Weizenbraunrost (Puccinia triticina) 10 Tage nach Inokulation. Die Kontrollpflanzen waren intensiv mit Braunrost besiedelt. Nach 7 Tagen zeigten alle geprüften Rhabarberwurzelextrakte eine deutliche Wirkung gegen Weizenbraunrost, wie Fig. 11 zeigt. Zwischen den Rhabarberwurzelextrakten (GT 2 und GT 19) ergaben sich aufgrund der sehr guten Wirkung keine bemerkenswerten Unterschiede.

### Ergebnis eines Freilandversuches zur Wirkung der Rhabarberwurzelextrakte gegen Echten Mehltau (Oidium) in Reben

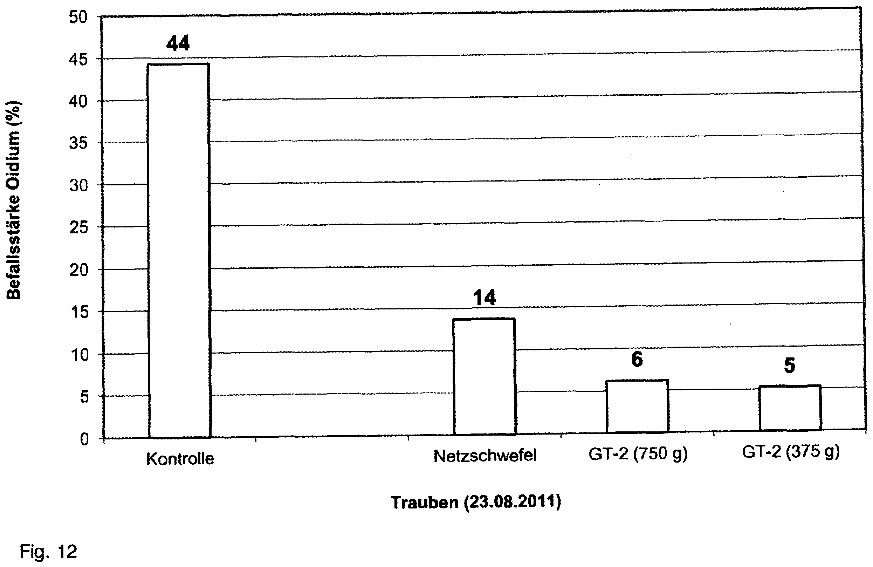

Die Fig. 12 zeigt die Wirkung des Rhabarberwurzelextraktes GT 2 (hydrophobe Phase) gegen den Echten Mehltau (*Oidium*) in Reben (Traubenbefall) in den Basisaufwandmengen von 375 und 750 g/10.000 m².

Die Pilzkrankheit "Echter Mehltau" (Oidium) stellt weltweit die wirtschaftlich bedeutendste Rebenkrankheit dar. Der Ascomycet befällt alle Europäer-Reben, wobei Sorten wie Chardonnay, Kerner, Scheurebe, Müller-Thurgau, Chenin blanc, Cabernet Franc, St. Laurent, Trollinger und Portugieser besonders anfällig sind.

Die Applikation der Präparate erfolgte in einem zeitlichen Intervall von 10 Tagen, beginnend mit dem BBCH-Entwicklungsstadium 50 und endend mit der Abschlussspritzung zum BBCH-Entwicklungsstadium 81 der Reben. Die Applikation erfolgte mit einem pneumatischen Applikationsgerät für Raumkulturen. Es wurden für die Applikation Teejet-Flachstrahldüsen verwendet. Die Basisaufwandmenge für GT 2 (hydrophobe Phase) betrug 375 beziehungsweise 750 g/10.000 m². Die Ausbringung erfolgte in Kombination mit dem im ökologischen Weinbau häufig verwendeten Orangenöl Prev_B2 als Additiv zur besseren Benetzung der Blätter. Die Soloanwendung von Orangenöl Prev_B2 hat keine Wirkung gegen Oidium. Als Vergleichsmittel wurde ein Netzschwefelpräparat in der zugelassenen Aufwandmenge ausgebracht. Es zeigte sich, dass der Traubenbefall mit Oidium durch den Rhabarberwurzelextrakt sehr wirksam eingeschränkt werden konnte und in der Wirkung höher lag als beim kommerziellen Vergleichspräparat Netzschwefel, welches im ökologischen Weinbau gegen Oidium eingesetzt wird, wie aus der Fig. 12 hervorgeht.

### Wirkung von Rhabarberwurzelextrakten gegen verschiedene phytopathogene Pilze im Agardiffusionstest

Die Pilze wurden auf V8-Agarplatten bei 25 °C im Brutschrank im Dunkeln kultiviert. Pilzmycel der bewachsenen Platten wurde mit einem Korkbohrer (5 mm Durchmesser) am Agar-Plattenrand einer aktiv wachsenden Pilzkultur entnommen und mit einer Impfnadel unter sterilen Bedingungen im Zentrum auf V8-Agarplatten plaziert, denen beim Ausgießen in die Petrischalen zuvor finale Konzentrationen von 0, 100, 250, 500 und 1000 ppm Rhabarberwurzelextrakt zugemischt worden waren. Die Bonitierung des Pilzwachstums erfolgte in Abständen von 7 Tagen durch Messung des Pilzwachstums auf den Agarplatten.

Die Tabelle 1 zeigt die Wirkung des Rhabarberwurzelextraktes GT 2 (hydrophobe Phase) gegen verschiedene phytopathogene Pilze im Agardiffusionstest.

**Tabelle 1**

| | | Wachstum prozentual zur Kontrolle | | | |
|---|---|---|---|---|---|
| PG | Pathogen | 100 ppm | 250 ppm | 500 ppm | 1000 ppm |
| 1 | *Thielaviopsis basicola* (BK18) | 74 | 43 | 48 | 30 |
| 2 | *Phytophthora capsici* (V8) | 56 | 17 | 0 | 0 |
| 3 | *Fusarium graminearum* (WT 1003) | 79 | 53 | 37 | 26 |
| 4 | *Bipolaris sorokiniana* (JB2) | 74 | 43 | 48 | 0 |
| 5 | *Rhizoctonia solani* 512 (AG 2) | 25 | 25 | 13 | 0 |

Aus den Untersuchungen geht hervor, dass konzentrationsabhängig eine sehr gute Wirkung des Rhabarberwurzelextraktes GT 2 (hydrophobe Phase) gegen den falschen Mehltaupilz Phytophthora capsici gegeben war und des Weiteren auch Bipolaris sorokiniana und Rhizoctonia solani (AG 2) wirkungsvoll kontrolliert wurden.

Untersuchungen an Gerste mit Rhabarberwurzelextrakten zeigten zudem eine Erhöhung der Ascorbatperoxidase- sowie Dehydroascorbat- Reduktase-Aktivität. Beide Enzyme gelten als Schlüsselproteine des Ascorbat-Glutathion-Zyklus, in dem reaktive Sauerstoffspecies detoxifiziert werden. Die Ergebnisse der Untersuchungen deuten auf das Potenzial pflanzlicher Phenole aus Rhabarberwurzelextrakten gegenüber wichtigen Pflanzenkrankheiten hin. Insbesondere das breite Wirkungsspektrum sowohl gegen Echte Mehltaupilze (Getreidemehltau, Echter Mehltau in Reben) als auch Falsche Mehltaupilze (Phytophthora capsici) sowie gegen Rostpilze (Puccinia triticina), Rhizoctonia und Bipolaris sorokiniana zeigt, dass die erfindungsgemäßen Rhabarberwurzelextrakte eine beachtliche Anzahl sehr wichtiger Pflanzenkrankheiten erfassen. Die hier aufgeführten phytopathogenen Pilze zählen zu den global bedeutendsten Pflanzenkrankheiten. Das breite Wirkungsspektrum gegen Pflanzenkrankheiten sowie das weite Applikationsfenster durch sowohl protektive als auch kurative Anwendung der erfindungsgemäßen Rhabarberwurzelextrakte wird von den im Stand der Technik aufgeführten Verfahren nicht erreicht.

Nachfolgend werden beispielhaft Ergebnisse zur inhaltsstofflichen Charakterisierung der in den Figuren 6, 9, 10, 11 und 12 gezeigten hydrophoben Phasen dargestellt. Die isolierten polyphenolischen Extrakte wurden charakterisiert über HPLC mit Dioden-Array-Detektion beziehungsweise über die Kopplung HPLC mit Massenspektrometrie (negative Ionisierung im Electrospray-lonisationsmodus).

**Chromatografische Bedingungen:**

| | | |
|---|---|---|
| Trennsäule: | SYNERGI Polar-RP 80A; 250*2,0 mm; 4 µ | |
| Mobile Phase: | A: 0,1 % Wasser/Ameisensäure | |
| | B: 100 % Methanol | |

| Gradient: | Zeit (min) | % B |
|---|---|---|
| | 0 | 0 |
| | 10 | 10 |
| | 40 | 50 |
| | 41 | 0 |
| | 55 | 0 |
| Flussrate: | 0,3 ml/min | |
| Injektionsvolumen: | 10 µl Probe | |
| Detektor: | DAD, 190 bis 500 nm und MS im Full Scan Modus | |
| Analysenzeit: | 58 min. | |

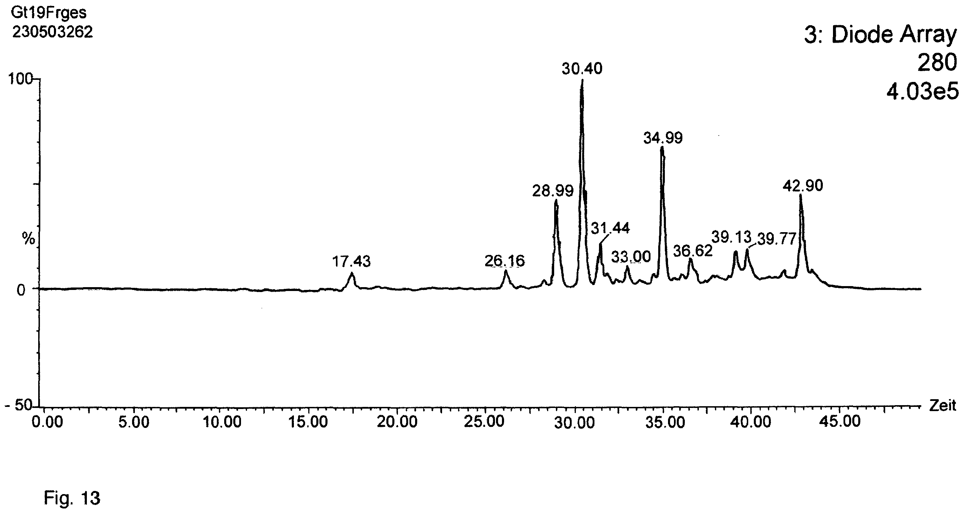

In Fig. 13 wird beispielhaft für den GT 19 eine solche chromatografische Auftrennung der hydrophoben Phase gezeigt.

Die Tabelle 2 zeigt die gefundenen polyphenolischen Substanzen geordnet nach Stoffklassen beispielhaft für die hydrophoben Phasen der GT 2, GT 19 und GT 25.

**Tabelle 2**

| Stoffklasse | GT 2 | GT 19 | GT 25 |
|---|---|---|---|
| Flavan-3-ole | Catechin | Catechin | Catechin |
| | | Epicatechin | Epicatechin |
| | Epicatechingallat | Epicatechingallat | Epicatechingallat |
| | | ProcyanidinB1 | |
| | ProcyanidinB2 | ProcyanidinB2 | ProcyanidinB2 |
| Oligomere Proanthocyanidine | Dimeres Procyanidin, galloyliert | | |
| Vorstufen hydrolysierbarer Gerbstoffe | Monogalloylglucose | Monogalloylglucose | Monogalloylglucose |
| | Digalloylglucose | | Digalloylglucose |
| Stilbene | Rhaponticin | Rhaponticin | Rhaponticin |
| | Rhaponticin, galloyliert | Rhaponticin, galloyliert | Rhapontigenin |
| | Desoxyrhaponticin | Desoxyrhaponticin | Rhaponticin, galloyliert |
| | Piceatannolglucosid | Piceatannolglucosid | Desoxyrhaponticin |
| | Piceatannolglucosid, galloyliert | Piceatannolglucosid, galloyliert | Piceatannolxylopyranosid |
| | Trihydroxystilbenglucosid, galloyliert | Resveratrolglucosid | Piceatannolglucosid |
| | | Trihydroxystilbenglucosid, galloyliert | Piceatannolglucosid, galloyliert |
| | | | Resveratrolglucosid |
| | | | Resveratrol |

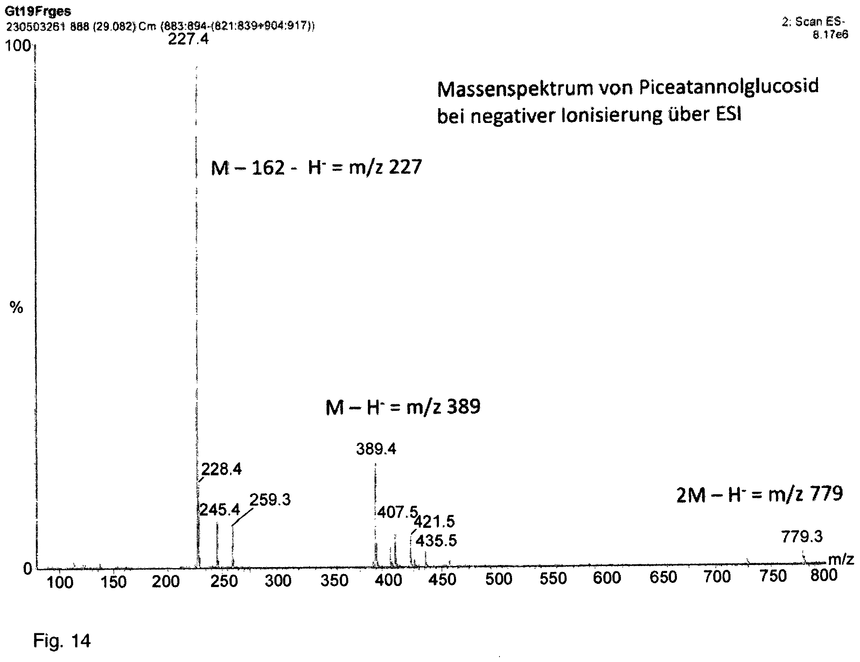

Fig. 14 zeigt das Massenspektrum von Piceatannolglucosid mit der Masse 390 Da beziehungsweise u (u = unified atomic mass unit; 1u entspricht 1/12 der Masse des ¹²C Isotops) als ein Beispiel zur qualitativen Identifizierung der polyphenolischen Substanzen mittels Massenspektroskopie.

## Patentansprüche

1. Verwendung einer antifungalen Formulierung zur Bekämpfung von pilzlichen Pflanzenkrankheiten, wobei zu den zu bekämpfenden phytopathogenen Pilzen ein oder mehrere phytopathogene Pilze gehören und die antifungale Formulierung zumindest Wirkstoffe oder Wirkstoffzusammensetzungen aus polyphenolischen, keine Anthrachinone und Anthrachinonderivate enthaltenden Extrakten der Wurzeln von Rheum-Arten enthält, wobei diese Wirkstoffe oder Wirkstoffzusammensetzungen erhältlich sind durch ein Verfahren, umfassend die folgenden Verfahrensschritte:
a) kontinuierlich oder batchweise durchgeführte, ein- oder mehrstufige Extraktion der gereinigten und zerkleinerten Wurzeln, wobei die Wurzeln ungetrocknet oder getrocknet eingesetzt werden, mittels eines alkoholischen Lösungsmittels;
b) schonende Entfernung des alkoholischen Lösungsmittels bei reduziertem Druck und bei Temperaturen bis maximal 50 °C unter Zugabe von Wasser, wobei aus der gebildeten wässrigen Phase lipophile Begleitstoffe durch Kühlen bei einer Temperatur von 2 bis 8 °C ausgefällt und mittels Filtration oder Zentrifugation entfernt werden und weitere lipophile Begleitstoffe durch anschließendes Ausschütteln der wässrigen Phase mit Petrolether entfernt werden oder aus der gebildeten wässrigen Phase lipophile Begleitstoffe mittels flüssig/flüssig-chromatografischer Verfahren abgetrennt werden;
c) extraktive Auftrennung des unter b) gewonnenen wässrigen Extraktes unter Verwendung eines organischen Lösungsmittels aus der Gruppe der Ester in eine hydrophile und eine hydrophobe Phase; und
d) Gewinnung von Extrakten aus beiden Extraktphasen des Verfahrensschrittes c) in den folgenden Teilschritten:
d₁) eine säulenchromatografische Auftrennung an Sephadex LH-20 der hydrophoben Extraktphase oder der hydrophilen Extraktphase erfolgt, wobei als Elutionsmittel nacheinander unterschiedliche Alkohole und ein Gemisch aus Lösungsmitteln der Alkanone-Reihe und Wasser eingesetzt werden, und danach
d₂) die gewonnenen Fraktionen aus der hydrophoben Phase oder der hydrophilen Phase mit jeweils gleichem Inhaltsstoffspektrum zu Wirkstofffraktionen zusammengefasst werden, worauf
d₃) eine Auswahl einzelner Wirkstofffraktionen zur Verwendung nach Durchführung eines Wirksamkeitsnachweises der Wirkstofffraktionen hinsichtlich ihrer protektiven und/oder kurativen Wirksamkeit gegenüber phytopathogenen Pilzen getroffen wird.

2. Verwendung einer antifungalen Formulierung nach Anspruch 1, **dadurch gekennzeichnet, dass** in Verfahrensschritt a) die Wurzeln getrocknet und gemahlen eingesetzt werden.

3. Verwendung einer antifungalen Formulierung nach Anspruch 1 oder 2, **dadurch gekennzeichnet, dass** in Verfahrensschritt a) die Extraktion in einer bis hundert Stufen erfolgt.

4. Verwendung einer antifungalen Formulierung nach Anspruch 3, **dadurch gekennzeichnet, dass** in Verfahrensschritt a) die Extraktion in zwei bis sechs Stufen erfolgt.

5. Verwendung einer antifungalen Formulierung nach einem der Ansprüche 1 bis 4, **dadurch gekennzeichnet, dass** Verfahrensschritt b) unter Einsatz eines Schutzgases zur Reduzierung oxidativer Prozesse erfolgt.

6. Verwendung einer antifungalen Formulierung nach Anspruch 5, **dadurch gekennzeichnet, dass** ein chemisch inertes Schutzgas, vorzugsweise Stickstoff, verwendet wird.

7. Verwendung einer antifungalen Formulierung nach einem der Ansprüche 1 bis 6, **dadurch gekennzeichnet, dass** als organisches Lösungsmittel aus der Gruppe der Ester in Verfahrensschritt c) Essigsäureethylester angewandt wird.

8. Verwendung einer antifungalen Formulierung nach einem der Ansprüche 1 bis 7, **dadurch gekennzeichnet, dass** in Verfahrenschritt d₁) als Alkohole Methanol, Ethanol, Propanol oder Butanol und als Lösungsmittel der Alkanone-Reihe Propanon, Butanon oder Pentanon eingesetzt werden.

9. Verwendung einer antifungalen Formulierung nach einem der Ansprüche 1 bis 8, **dadurch gekennzeichnet, dass** folgende Rheum-Arten verwendet werden können: Rheum rhaponticum L., Rheum officinale Baill.sp., Rheum palmatum L., Rheum altaicum LOSINSK., Rheum rhabarberum L., Rheum undulatum L., Rheum alexandrae VEITCH., Rheum wittrockii LUNDSTR, Rheum maximowiczii LOSINSK., Rheum leucorrhizum PALL., Rheum tanguticum Maxim., Rheum nobile Hook et. Thomson, Rheum alexandrae Batalin, Rheum tibeticum, Rheum palaestinum, Rheum australe, Rheum collinianum, Rheum compactum, Rheum delavayi, Rheum franzenbachii, Rheum moorcroftianum, Rheum nanum, Rheum ribes, Rheum robertianum, Rheum rupestre, Rheum songaricum, Rheum spiciforme, Rheum tataricum, Rheum tetragonopos, Rheum turcestanicum und Rheum webbianum.

10. Verwendung einer antifungalen Formulierung nach einem der Ansprüche 1 bis 9, **dadurch gekennzeichnet, dass** genetisch einheitliches Material verwendet wird.

11. Verwendung einer antifungalen Formulierung nach einem der Ansprüche 1 bis 10, enthaltend jeweils als Koformulierung mindestens einen Wirkstoff aus dem polyphenolischen Extrakt sowie einen oder mehrere biologische Antagonisten für die Kontrolle von Viren, Bakterien, Nematoden, Pilzen, Insekten oder Unkräutern.

12. Verwendung einer antifungalen Formulierung nach Anspruch 11, **dadurch gekennzeichnet, dass** ein oder mehrere biologische Antagonisten aus der Gruppe Bacillus thuringiensis, Bacillus subtilus, Verticillium lecanii, Autographica californica NPV, Beauvaria bassicana, Metarhizium anisopliae, Pseudomonas fluorescens und Steptomyces griseoviridis, Trichoderma harzianum enthalten sind.

13. Verwendung einer antifungalen Formulierung nach einem der Ansprüche 1 bis 12, enthaltend jeweils als Koformulierung mindestens einen Wirkstoff aus dem polyphenolischen Extrakt und ein chemisches Agenz, das systemisch erworbene Resistenz in Pflanzen induziert, das heißt also einen Wirkstoff, der über die Modulierung der Salicylsäure-Biosynthese sowie über die Induktion von *pathogenesis-related* (PR)-Genen charakterisiert ist und somit zu der in Pflanzen systemisch erworbenen Resistenz (SAR) gegenüber Pflanzenkrankheiten beiträgt, insbesondere 2,6-Dichlor-isonikotinsäure (DCINA) oder Benzo(1,2,3)-thiadiazolcarbothionsäure-S-methylesther (BTH).

14. Verwendung einer antifungalen Formulierung nach einem der Ansprüche 1 bis 12, enthaltend jeweils als Koformulierung mindestens einen Wirkstoff aus dem polyphenolischen Extrakt und nichtpathogene Rhizobakterien oder symbiotische Wurzelpilze, die systemische Resistenz in Pflanzen induzieren (induced systemic resistance = ISR), das heißt solche Mikroorganismen enthalten, welche über die Modulierung der Jasmonat-Biosynthese zu der in Pflanzen induzierten Resistenz gegenüber Pflanzenkrankheiten beitragen.

15. Verwendung einer antifungalen Formulierung nach einem der Ansprüche 1 bis 14, enthaltend jeweils als Koformulierung mindestens einen Wirkstoff aus dem polyphenolischen Extrakt und ein Adjuvants oder mehrere Adjuvantien zur Verbesserung der Wirkung und Regenfestigkeit.

16. Verwendung einer antifungalen Formulierung nach einem der Ansprüche 1 bis 15, **dadurch gekennzeichnet, dass** zu den ein oder mehreren phytopathogenen Pilzen Blumeria graminis f. sp. hordei ; Erysiphe spec.; Rostkrankheiten, insbesondere Puccinia graminis, Puccinia triticina, Puccinia striiformis, Phakopsora spec., Hemileia vastatrix, Uromyces dianthi; Oidium; Septoria; Fusarium, insbesondere Fusarium solani complex, Fusarium oxysporum, Fusarium verticillioides, Fusarium proliferatum, Fusarium culmorum, Fusarium graminearum; Rhizoctonia, insbesondere Rhizoctonia solani-Komplex; Alternaria; Helminthosporium; Bipolaris, insbesondere Bipolaris sorokiniana; Thielaviopsis; Botrytis; Phytophthora, insbesondere Phytophthora capsici, Phytophthora infestans; Fusarium, insbesondere Fusarium spec.; Venturia, insbesondere Venturia inaeqaulis; Plasmopora, insbesondere Plasmopora viticola; oder Perenospora zählen.

## Claims

1. Use of an antifungal formulation for controlling fungal plant diseases, wherein the phytopathogenic fungi to be controlled include one or more phytopathogenic fungi and wherein the antifungal formulation comprises at least active substances or active substance compositions of polyphenolic extracts, free from anthraquinones and anthraquinone derivatives, of the roots of *Rheum* species, wherein these active substances or active substance compositions are obtainable by a process comprising the following process steps:
a) one-step or multi-step extraction, carried out continuously or batchwise, of the cleaned and comminuted roots, wherein the roots are employed in undried or dried form, by means of an alcoholic solvent;
b) gentle removal of the alcoholic solvent under reduced pressure under temperatures of up to not more than 50°C, with the addition of water, wherein, as the result of cooling at a temperature of from 2 to 8°C, lipophilic accompanying substances are precipitated from the aqueous phase formed and are removed by means of filtration or centrifugation and further lipophilic accompanying substances are removed by subsequently extracting the aqueous phase by shaking with petroleum ether or lipophilic accompanying substances are separated from the aqueous phase formed by means of liquid/liquid chromatographic methods;
c) exctractive separation of the aqueous extract obtained in b) using an organic solvent from the group of the esters, to give a hydrophilic and a hydrophobic phase; and
d) obtaining extracts from both extract phases of process step c) in the following substeps:
d₁) a column-chromatographic separation of the hydrophobic extract phase or of the hydrophilic extract phase on Sephadex LH-20 is carried out, wherein the eluents employed in succession are different alcohols and a mixture of solvents of the alcanone series and water, and thereafter
d₂) those fractions obtained from the hydrophobic phase or the hydrophilic phase which have in each case the same constituent spectrum are combined to give active substance fractions, whereupon
d₃) a selection of individual active substance fractions for use is made after performing a proof of activity of the active substance fractions in respect of their protective and/or curative activity against phytopathogenic fungi.

2. Use of an antifungal formulation according to Claim 1, **characterized in that,** in process step a), the roots are employed in dried and ground form.

3. Use of an antifungal formulation according to Claim 1 or 2, **characterized in that,** in process step a), the extraction is performed in one to one hundred steps.

4. Use of an antifungal formulation according to Claim 1 or 3, **characterized in that,** in process step a), the extraction is performed in two to six steps.

5. Use of an antifungal formulation according to one of Claims 1 to 4, **characterized in that** process step b) is performed using a protective gas so as to reduce oxidative processes.

6. Use of an antifungal formulation according to Claim 5, **characterized in that** a chemically inert protective gas, preferably nitrogen, is used.

7. Use of an antifungal formulation according to one of Claims 1 to 6, **characterized in that** the organic solvent from the group of the esters which is used in process step c) is ethyl acetate.

8. Use of an antifungal formulation according to one of Claims 1 to 7, **characterized in that,** in process step d₁), the alcohols which are employed are methanol, ethanol, propanol or butanol and a solvent from the alcanone series which are employed are propanone, butanone or pentanone.

9. Use of an antifungal formulation according to one of Claims 1 to 8, **characterized in that** the following Rheum species may be employed: Rheum rhaponticum L., Rheum officinale Baill.sp., Rheum palmatum L., Rheum altaicum LOSINSK., Rheum rhabarberum L., Rheum undulatum L., Rheum alexandrae VEITCH., Rheum wittrockii LUNDSTR, Rheum maximowiczii LONSINSK., Rheum leucorrhizum PALL., Rheum tanguticum Maxim., Rheum nobile Hook et. Thomson, Rheum alexandrae Batalin, Rheum tibeticum, Rheum palaestinum, Rheum australe, Rheum collinianum, Rheum compactum, Rheum delavayi, Rheum franzenbachii, Rheum moorcroftianum, Rheum nanum, Rheum ribes, Rheum robertianum, Rheum rupestre, Rheum songaricum, Rheum spiciforme, Rheum tataricum, Rheum tetragonopos, Rheum turcestanicum and Rheum webbianum.

10. Use of an antifungal formulation according to one of Claims 1 to 9, **characterized in that** genetically uniform material is used.

11. Use of an antifungal formulation according to one of Claims 1 to 10, comprising, in each case as a coformulation, at least one active substance from the polyphenolic extract and one or more biological antagonists for the control of viruses, bacteria, nematodes, fungi, insects or weeds.

12. Use of an antifungal formulation according to Claim 11, **characterized in that** one or more biological antagonists from the group Bacillus thuringiensis, Bacillus subtilus, Verticillium lecanii, Autographica californica NPV, Beauvaria bassicana, Metarhizium anisopliae, Pseudomonas fluorescens and Steptomyces griseoviridis, Trichoderma harzianum are present.

13. Use of an antifungal formulation according to one of Claims 1 to 12, comprising, in each case as coformulation, at least one active substance from the polyphenolic extract and a chemical agent which induces systemically acquired resistance in plants, that is to say an active substance which is characterized via the modulation of salicylic acid biosynthesis and via the induction of pathogenesis-related (PR) genes, and which thus contributes to the systemically acquired resistance (SAR) in plants to plant diseases, in particular 2,6-dichloroisonicotinic acid (DCINA) or S-methyl-benzo(1,2,3)-thiadiazolecarbothiorate (BTH).

14. Use of an antifungal formulation according to one of Claims 1 to 12, comprising, in each case as a coformulation, at least one active substance from the polyphenolic extract and non-pathogenic rhizo bacteria or symbiotic root fungi which induce systemic resistance in plants (induced systemic resistance = ISR), that is to say which comprise those microorganisms which contribute to the resistance in plants to plant diseases via the modulation of jasmonate biosynthesis.

15. Use of an antifungal formulation according to one of Claims 1 to 14, in each case comprising, as a coformulation, at least one active substance from the polyphenolic extract and one adjuvant or a plurality of adjuvants for improving the activity and rain fastness.

16. Use of an antifungal formulation according to one of Claims 1 to 15, **characterized in that** the one or more phytopathogenic fungi include Blumeria graminis f. sp. Hordei; Erysiphe spec.; rust diseases, in particular Puccinia graminis, Puccinia triticina, Puccinia striiformis, Phakopsora spec., Hemileia vastarix, Uromyces dianthi; Oidium; Septoria; Fusarium, in particular Fusarium solani complex, Fusarium oxysporum, Fusarium verticillioides, Fusarium proliferatum, Fusarium culmorum, Fusarium graminearum, Rhizoctonia, in particular Rhizoctonia solani-complex; Alternaria; Helminthosporium; Bipolaris, in particular Bipolaris sorokiniana; Thielaviopsis; Botrytis; Phytophthora, in particular Phytophthora capsici, Phytophthora infestans; Fusarium, in particular Fusarium spec.; Venturia, in particular Venturia inaeqaulis; Plasmopora, in particular Plasmopora viticola; or Perenospora.

## Revendications

1. Utilisation d'une formulation antifongique pour lutter contre des maladies cryptogamiques des plantes, dans laquelle un ou plusieurs champignons phytopathogènes font partie des champignons phytopathogènes à combattre et la formulation antifongique contient au moins des substances actives ou des compositions de substances actives d'extraits polyphénoliques des racines d'espèces de *rhéum,* ne contenant pas d'anthraquinone ou de dérivés d'anthraquinone, dans laquelle ces substances actives ou ces compositions de substances actives peuvent être obtenues par un procédé comprenant les étapes de procédé suivantes:
a) extraction effectuée en continu ou par lots, en une ou plusieurs étapes, des racines nettoyées et réduites ou broyées, dans lequel on utilise les racines à l'état non séché ou séché, au moyen d'un solvant alcoolique;
b) élimination précautionneusement du solvant alcoolique à pression réduite et à des températures de 50°C au maximum avec addition d'eau, dans lequel on précipite des substances associées lipophiles hors de la phase aqueuse formée par refroidissement à une température de 2 à 8°C et on les élimine par filtration ou centrifugation et on élimine d'autres substances associées lipophiles ensuite par agitation de la phase liquide avec de l'éther de pétrole ou on sépare des substances associées lipophiles hors de la phase aqueuse formée au moyen de procédés chromatographiques liquide-liquide;
c) séparation extractive de l'extrait aqueux obtenu sous b) avec utilisation d'un solvant organique du groupe des esters en une phase hydrophile et une phase hydrophobe; et
d) obtention d'extraits des deux phases d'extraits de l'étape de procédé c), dans les étapes partielles suivantes:
d₁) on effectue une séparation chromatographique sur colonne au Sephadex LH-20 de la phase d'extrait hydrophobe ou de la phase d'extrait hydrophile, dans lequel on utilise comme agents d'élution les uns après les autres différents alcools et un mélange de solvants de la série des alcanones et d'eau, et ensuite
d₂) on rassemble les fractions obtenues à partir de la phase hydrophobe ou de la phase hydrophile ayant respectivement le même spectre d'ingrédients en fractions de substances actives, puis
d₃) on opère une sélection de fractions de substances actives individuelles pour leur utilisation après avoir effectué une vérification de l'efficacité des fractions de substances actives en ce qui concerne leur efficacité de protection et/ou de traitement contre des champignons phytopathogènes.

2. Utilisation d'une formulation antifongique selon la revendication 1, **caractérisée en ce que** l'on utilise à l'étape de procédé a) les racines sous forme séchée et moulue.

3. Utilisation d'une formulation antifongique selon la revendication 1 ou 2, **caractérisée en ce que** l'on effectue l'extraction à l'étape de procédé a) en une à cent étapes.

4. Utilisation d'une formulation antifongique selon la revendication 3, **caractérisée en ce que** l'on effectue l'extraction à l'étape de procédé a) en deux à six étapes.

5. Utilisation d'une formulation antifongique selon l'une quelconque des revendications 1 à 4, **caractérisée en ce que** l'on exécute l'étape de procédé b) avec emploi d'un gaz de protection pour la réduction de processus oxydants.

6. Utilisation d'une formulation antifongique selon la revendication 5, **caractérisée en ce que** l'on utilise un gaz de protection chimiquement inerte, de préférence de l'azote.

7. Utilisation d'une formulation antifongique selon l'une quelconque des revendications 1 à 6, **caractérisée en ce que** l'on utilise comme solvant organique du groupe des esters à l'étape de procédé c) de l'ester éthylique de l'acide acétique.

8. Utilisation d'une formulation antifongique selon l'une quelconque des revendications 1 à 7, **caractérisée en ce que** l'on utilise comme alcools dans l'étape de procédé d₁) du méthanol, de l'éthanol, du propanol ou du butanol et comme solvant de la série des alcanones du propanone, du butanone ou du pentanone.

9. Utilisation d'une formulation antifongique selon l'une quelconque des revendications 1 à 8, **caractérisée en ce que** l'on peut utiliser les espèces de rhéum suivantes: rheum rhaponticum L., rheum officinale Baill. sp., rheum palmatum L., rheum altaicum LOSINSK., rheum rhabarberum L., rheum undulatum L., rheum alexandrae VEITCH., rheum wittrockii LUNDSTR., rheum maximowiczii LOSINSK., rheum leucorrhizum PALL., rheum tanguticum Maxim., rheum nobile Hook et. Thomson, rheum alexandrae Batalin, rheum tibeticum, rheum palaestinum, rheum australe, rheum collinianum, rheum compactum, rheum delavayi, rheum franzenbachii, rheum moorcroftianum, rheum nanum, rheum ribes, rheum
robertianum, rheum rupestre, rheum songaricum, rheum spiciforme, rheum tataricum, rheum tetragonopos, rheum turcestanicum et rheum webbianum.

10. Utilisation d'une formulation antifongique selon l'une quelconque des revendications 1 à 9, **caractérisée en ce que** l'on utilise un matériau génétiquement unitaire.

11. Utilisation d'une formulation antifongique selon l'une quelconque des revendications 1 à 10, contenant respectivement comme co-formulation au moins une substance active provenant de l'extrait polyphénolique ainsi qu'un ou plusieurs antagoniste(s) biologique(s) pour le contrôle de virus, de bactéries, de nématodes, de champignons, d'insectes ou de mauvaises herbes.

12. Utilisation d'une formulation antifongique selon la revendication 11, **caractérisée en ce qu'**elle contient un ou plusieurs antagoniste(s) biologique(s) du groupe Bacillus thuringiensis, Bacillus subtilus, Verticillium lecanii, Autographica california NPV, Beauvaria bassicana, Metarhizium anisopliae, Pseudomonas fluorescens et Streptomyces griseoviridis, Trichoderma harzianum.

13. Utilisation d'une formulation antifongique selon l'une quelconque des revendications 1 à 12, contenant respectivement comme co-formulation au moins une substance active provenant de l'extrait polyphénolique et un agent chimique, qui induit une résistance acquise de façon systémique dans des plantes, en d'autres termes donc une substance active, qui est **caractérisée par** la modulation de la biosynthèse de l'acide salicylique ainsi que par l'induction de gènes liés à la pathogénèse (PR) et contribue ainsi à la résistance acquise de façon systémique dans les plantes (SAR) contre des maladies des plantes, en particulier l'acide 2,6-dichloro-isonicotinique (DCINA) ou l'ester méthylique de l'acide benzo(1,2,3)-thiadiazoles carbothionique (BTH).

14. Utilisation d'une formulation antifongique selon l'une quelconque des revendications 1 à 12, contenant respectivement comme co-formulation au moins une substance active provenant de l'extrait polyphénolique et des rhizobactéries non pathogènes ou des mycorhizes symbiotiques, qui induisent dans les plantes une résistance systémique (induced systemic résistance = ISR), en d'autres termes contiennent des microorganismes, qui contribuent à la résistance induite dans la plante contre des maladies des plantes par la modulation de la biosynthèse du jasmonate.

15. Utilisation d'une formulation antifongique selon l'une quelconque des revendications 1 à 14, contenant respectivement comme co-formulation au moins une substance active provenant de l'extrait polyphénolique et un adjuvant ou plusieurs adjuvants pour l'amélioration de l'action et de la résistance à la pluie.

16. Utilisation d'une formulation antifongique selon l'une quelconque des revendications 1 à 15, **caractérisée en ce que** lesdits un ou plusieurs champignons phytopathogènes comprennent Blumeria graminis f. sp. hordei; Erysiphe spec.; maladies de la rouille, en particulier Puccinia graminis, Puccinia triticina, Puccinia striiformis, Phakopsora spec., Hemiléia vastatrix, Uromyces dianthi; Oïdium; Septoria; Fusarium, en particulier Fusarium solani complex, Fusarium oxysporum, Fusarium verticillioides, Fusarium proliferatum, Fusarium culmorum, Fusarium graminearum; Rhizoctonia, en particulier Rhizoctonia solani-complex; Alternaria; Helminthosporium; Bipolaris, en particulier Bipolaris sorokiniana; Thielaviopsis; Botrytis; Phytophthora, en particulier Phytophthora capsici, Phytophthora infestans; Fusarium, en particulier Fusarium spec.; Venturia, en particulier Venturia inaequalis; Plasmopora, en particulier Plasmopora viticola; ou Perenospora.
